# EUROPEAN PATENT APPLICATION

(11) **EP 4 123 596 A1**
(43) Date of publication of application: **25.01.2023**
(21) Application number: 21186315.4
(22) Date of filing: 19.07.2021
(51) Int. Cl.: G06V 20/20

(54) **IMAGE CAPTURE AND STORAGE**

(71) Applicant: Nokia Technologies Oy, 02610 Espoo (FI)
(72) Inventor: ERONEN, Antti Johannes, Tampere (FI); LEHTINIEMI, Arto Juhani, Lempäälä (FI); VILERMO, Miikka Tapani, Siuro (FI); HEIKKINEN, Mikko Olavi, Tampere (FI)
(74) Representative: Nokia EPO representatives

(57) **Abstract**

An apparatus comprising:
a camera for capturing an image of a scene, the location of the scene relative to the apparatus defining a first direction;
means for processing the image of the scene captured by the camera to identify one or more objects at least partially included within the image of the scene captured by the camera as one or more faces at least partially included within the image of the scene captured by the camera;
means for modifying the image of the scene captured by the camera to produce a modified scene image, that excludes, at least partially, at least one face from the image of the scene captured by the camera; and
means for causing display of the modified scene image.

## Description

### TECHNOLOGICAL FIELD

Embodiments of the present disclosure relate to image capture and storage.

### BACKGROUND

Embodiments of the present disclosure relate to image capture and storage.

It is generally desirable for a user to capture and store an optimal image. This can be problematic, particularly when capturing images of scenes comprising one or more people as each person can move.

A person who does not want to be in a captured image can be captured because they move in front of the camera or the camera moves. A person who does want to be in a captured image can be captured poorly or not at all because they move or the camera moves or because they are positioned poorly relative the camera. A person who the user wants to be in a captured image can be captured poorly or not at all because that person moves relative to the camera.

One approach to these problems is to capture and store in quick succession, a series of images of the scene or to store a video of the scene. The best image in the series or the best video frame can subsequently be selected by the user and the remaining images or video frames can be deleted. This approach uses a large amount of memory and is controlled manually by the user of the camera.

### BRIEF SUMMARY

According to various, but not necessarily all, embodiments there is provided an apparatus comprising:
a camera for capturing an image of a scene, the location of the scene relative to the apparatus defining a first direction;
means for processing the image of the scene captured by the camera to identify one or more objects at least partially included within the image of the scene captured by the camera as one or more faces at least partially included within the image of the scene captured by the camera;
means for modifying the image of the scene captured by the camera to produce a modified scene image, that excludes, at least partially, at least one face from the image of the scene captured by the camera; and
means for causing display of the modified scene image.

In some but not necessarily all examples, the apparatus is configured to communicate with at least one remote device separate from the apparatus to obtain parameters for performing face recognition on the image of the scene to recognize a face at least partially included within the image of the scene and associate an identity with the recognized face.

In some but not necessarily all examples, the apparatus comprises means for performing face recognition on the faces at least partially included within the image of the scene captured by the camera, wherein face recognition associates an identity with a recognized face;
means for labelling the faces for inclusion or exclusion in dependence on at least the face recognition; and
means for modifying the image of the scene captured by the camera to produce the modified scene image, wherein the faces labelled for inclusion are included in the modified scene image and the faces labelled for exclusion are excluded from the modified scene image.

In some but not necessarily all examples, the means for labelling the faces is configured to:
label a face for inclusion if the face is a recognized face and the identity associated with the recognized face is associated with permissive privacy settings,
label a face for exclusion if the face is a recognized face and the identity associated with the recognized face is not associated with permissive privacy settings, and
label a face for exclusion if the face is not a recognized face.

In some but not necessarily all examples, the apparatus comprises means for performing face recognition on the one or more objects identified as faces, wherein face recognition associates an identity with a recognized face at least partially included within the image of the scene
wherein the means for modifying the image of the scene captured by the camera is configured to produce the modified scene image in dependence on privacy settings for the identity associated with a recognized face,
wherein a face within the scene captured by the camera is retained within the modified scene image if the privacy settings associated with that face allow the face to be retained and otherwise the face within the scene captured by the camera is excluded.

In some but not necessarily all examples, the apparatus is configured to communicate with at least one remote device separate from the apparatus to obtain privacy settings associated with an identity.

In some but not necessarily all examples, the means for causing display of the modified scene image is configured to cause output on at least one display of the at least one face that is within the scene captured by the camera or of a compilation of faces that are within the scene captured by the camera.

In some but not necessarily all examples, the output at the display comprises only a cropped face or only cropped faces that are within the scene captured by the camera.

In some but not necessarily all examples, the output at the display comprises only a cropped face or cropped faces that have relative sizes that correspond to relative sizes of the faces within the image captured by the camera or have relative positions that correspond to relative positions of the faces within the image captured by the camera or have relative distortions that increase relative distortion of the faces within the image captured by the camera.

In some but not necessarily all examples, the means for causing display of the modified scene, to at least one person in the first direction, in dependence upon said processing of the image of the scene captured by the camera is configured to cause the display of the modified scene during a pre-capture preview stage before storage of the said image of the scene captured by the camera.
In some but not necessarily all examples, the apparatus comprises viewfinder means for displaying the modified scene image for user-selective storage by the apparatus.

In some but not necessarily all examples, the apparatus comprises means for causing display of the modified scene image to at least one person in the first direction.

In some but not necessarily all examples, the apparatus comprises a display oriented or orientable in the first direction, wherein the means for causing display of the modified scene image to at least one person in the first direction is configured to cause display of the modified scene image on the display.

In some but not necessarily all examples, a system comprises the apparatus and at least one remote device separate from the apparatus. The at least one remote device comprises a remote display. The means for causing display of the modified scene image to at least one person in the first direction, at the apparatus, is configured to cause display of the modified scene image on the remote display.

According to various, but not necessarily all, embodiments there is provided a computer program that when run by an apparatus comprising a camera for capturing an image of a scene, the location of the scene relative to the apparatus defining a first direction, enables at the apparatus:
means for processing the image of the scene captured by the camera to identify one or more objects at least partially included within the image of the scene captured by the camera as one or more faces at least partially included within the image of the scene captured by the camera;
means for modifying the image of the scene captured by the camera to produce a modified scene image, that excludes, at least partially, at least one face from the image of the scene captured by the camera; and
means for causing display of the modified scene image

According to various, but not necessarily all, embodiments there is provided examples as claimed in the appended claims.

According to various, but not necessarily all, embodiments there is provided a method performed at an apparatus comprising:
a camera for capturing an image of a scene, the location of the scene relative to the apparatus defining a first direction, the method comprising:
processing the image of the scene captured by the camera to identify one or more objects at least partially included within the image of the scene captured by the camera as one or more faces at least partially included within the image of the scene captured by the camera;
modifying the image of the scene captured by the camera to produce a modified scene image, that excludes, at least partially, at least one face from the image of the scene captured by the camera; and
causing display of the modified scene image

According to various, but not necessarily all, embodiments there is provided an apparatus comprising:
a camera for capturing an image of a scene, the location of the scene relative to the apparatus defining a first direction;
at least one processor; and
at least one memory including computer program code
the at least one memory and the computer program code configured to, with the at least one processor, cause the apparatus at least to perform:
   processing the image of the scene captured by the camera to identify one or more objects at least partially included within the image of the scene captured by the camera as one or more faces at least partially included within the image of the scene captured by the camera;
   modifying the image of the scene captured by the camera to produce a modified scene image, that excludes, at least partially, at least one face from the image of the scene captured by the camera; and
   causing display of the modified scene image

According to various, but not necessarily all, embodiments there is provided an apparatus comprising:
a camera for capturing an image of a scene, the location of the scene relative to the apparatus defining a first direction;
means for processing the image of the scene captured by the camera to identify one or more objects at least partially included within the image of the scene as one or more faces at least partially included within the scene captured by the camera; and
means for causing indication, to at least one person in the first direction, in dependence upon said processing of the image of the scene captured by the camera, wherein the indication is dependent upon inclusion, at least partially, of at least one face within the captured scene image.

In at least some examples, the indication is dependent upon inclusion, at least partially, of at least one face within the image of the scene and the indication is dependent upon exclusion of at least one face from the captured scene image.

The apparatus can comprise viewfinder means for providing an image of the scene for storage by the camera.

The apparatus can comprise means for modifying the image of the scene captured by the camera to produce a modified scene image, that excludes, at least partially, at least one face from the image of the scene captured by the camera.

According to various, but not necessarily all, embodiments there is provided an apparatus comprising:
a camera for capturing an image of a scene, the location of the scene relative to the apparatus defining a first direction;
means for processing the image of the scene captured by the camera to identify one or more objects at least partially included within the image of the scene captured by the camera as one or more faces at least partially included within the image of the scene captured by the camera;
means for modifying the image of the scene captured by the camera to produce a modified scene image, that excludes*, at least partially, at least one face from the image of the scene captured by the camera;
means for causing display of the modified scene image to at least one person in the first direction.

According to various, but not necessarily all, embodiments there is provided an apparatus comprising:
a camera for capturing an image of a scene determined by a field of view of the camera;
means for processing the image of the scene captured by the camera to identify one or more objects at least partially included within the image of the scene captured by the camera as one or more faces at least partially included within the image of the scene captured by the camera;
means for modifying the image of the scene captured by the camera to produce a modified scene image, that excludes*, at least partially, at least one face from the image of the scene captured by the camera;
means for causing display of the modified scene.

In at least some examples, the apparatus comprises means for causing display of the modified scene to at least one person in the field of view of the camera.

According to various, but not necessarily all, embodiments there is provided an apparatus comprising:
a camera for capturing an image of a scene determined by a field of view of the camera;
means for processing the image of the scene captured by the camera to identify objects included within the image of the scene captured by the camera as faces at least partially included within the image of the scene captured by the camera;
means for performing face recognition on the faces, wherein face recognition associates an identity with a recognized face;
means for labelling the faces for inclusion or exclusion in dependence on at least the face recognition;
means for modifying the image of the scene captured by the camera to produce a modified scene image, wherein the faces labelled for inclusion are included in the modified scene image and the faces labelled for exclusion are excluded from the modified scene image;
means for causing display of the modified scene to at least one person in the field of view of the camera.

### BRIEF DESCRIPTION

Some examples will now be described with reference to the accompanying drawings in which:
FIGs 1A and 1B illustrate respectively a rear-perspective view and a front-perspective view of an example of an apparatus that modifies an image of a scene captured by a camera to produce a modified scene image;
FIGs 2A, 2B, 2C illustrate respectively an image of a scene, a modified scene image on a rear-facing viewfinder display and a modified scene image on a front-facing indicator display, where at least one face in the image of the scene is excluded from the modified scene image(s) compared to the image of the scene;
FIG 3 illustrates a method for excluding a face from a modified scene image;
FIG 4 illustrates a more detailed method for excluding a face from a modified scene image;
FIG 5 illustrates a method for identifying faces in an image, excluding one of more of the faces to create a modified scene image and causing display of the modified scene image;
FIG 6 illustrates an example of an apparatus for producing the modified scene image;
FIGs 7A and 7B illustrate an example of a modified scene image on a rear viewfinder display and a front indicator display, respectively;
FIGs 8A and 8B illustrate an example of a modified scene image on a rear viewfinder display and a modified scene image on a front indicator display, respectively, at a first time and FIGs 8C and 8D illustrate a modified scene image on the rear viewfinder display and a modified scene image on the front indicator display, respectively, at a second later time after the face in the scene has moved;
FIGs 9A, 9B, 9C illustrate examples of communication to and from the apparatus;
FIG 10 illustrates an example of a remote apparatus at which a modified scene image or other indication can be displayed; and
FIG 11 illustrates an example of a carrier for a computer program.

### DETAILED DESCRIPTION

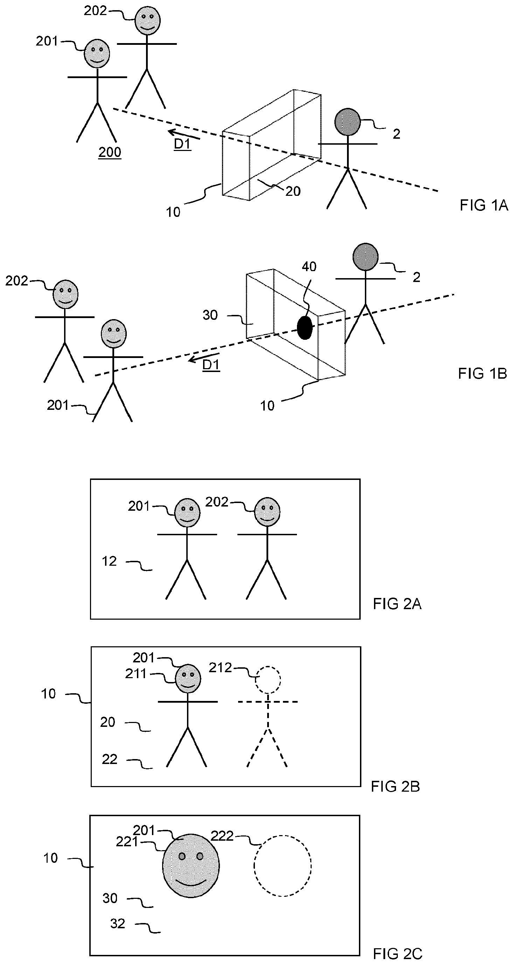

FIGs 1A and 1B illustrate an example of an apparatus 10 that modifies an image 12 of a scene 200 captured by a camera 40 to produce a modified scene image 22, 32 that excludes, at least partially, at least one face 201, 202 from the image 12 of the scene 200 captured by the camera 40 and causes display of the modified scene image 22, 32. The camera 40 can capture a still image and/or video as the image 12. The apparatus 10 can be any suitable apparatus it can be a mobile apparatus, a hand-held apparatus, a camera phone, a portable camera etc.

FIG 2A illustrates the scene 200 captured by a camera 40 at a camera sensor. The scene 200 includes faces 201, 202.

FIG 2B illustrates an example of a modified scene image 22 that is displayed at a rear-facing viewfinder display 20 of the apparatus 10. The modified scene image 22 includes the face 201 as image portion 211 but excludes the face 202 and has image portion 212.

In some examples, the modified scene image 22 comprises the image 12 with at least one face 202 excluded. In other examples, the modified scene image 22 comprises at least one face 201 cropped from the image 12 and displayed without the remainder of the image 12.

FIG 2C illustrates an example of a modified scene image 32 that is displayed at a front-facing indicator display 30 of the apparatus 10. The modified scene image 32 includes the face 201 as image portion 221 but excludes the face 202 and has image portion 222.

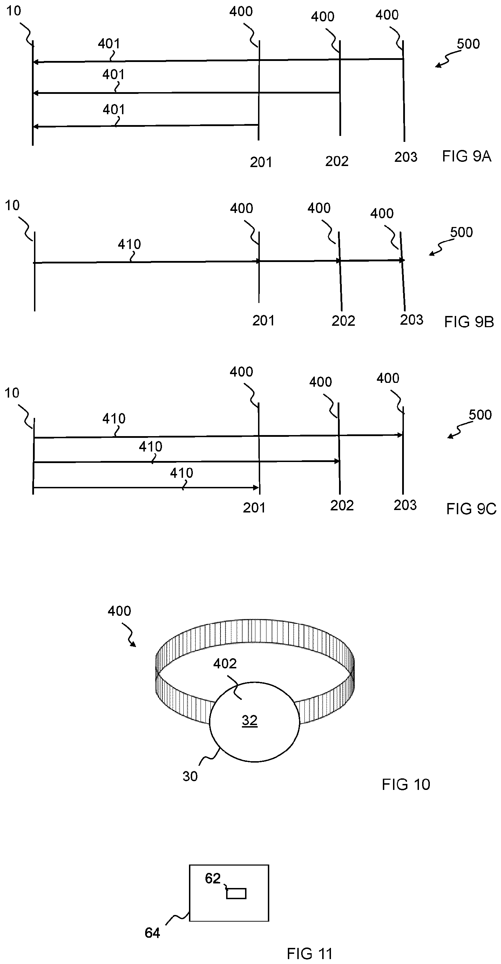

In other examples, for example as illustrated in FIG 10, a modified scene image 32 is displayed at a remote indicator display 30 of a remote device 400, separate from the apparatus 10. The modified scene image 32 can include the face 201 as image portion 221 but excludes the face 202.

In some examples, the modified scene image 32, whether displayed at a remote indicator display 30 or front-facing indicator display 30 comprises at least one face 201 cropped from the image 12 and displayed without the remainder of the image 12.

Thus, referring back to FIG 1A and 1B, the apparatus 10 comprises:
a camera 40 for capturing an image 12 of a scene 200, the location of the scene 200 relative to the apparatus 10 defining a first direction D1;
means for processing the image of the scene 200 captured by the camera 40 to identify one or more objects at least partially included within the image 12 of the scene 200 captured by the camera 40 as one or more faces 201, 202 at least partially included within the image 12 of the scene 200 captured by the camera 40;
means for modifying the image 12 of the scene 200 captured by the camera 40 to produce a modified scene image 22, 32, that excludes, at least partially, at least one face from the image 12 of the scene 200 captured by the camera 40; and
means for causing display of the modified scene image 22, 32.

The display of the modified scene image 22, 32 can be local at the viewfinder display 20 and/or at an indicator display 30 that can be local at the apparatus and/or remote at a remote device 400. The indicator display 30 can be facing the first direction D1.

In some examples, the processing of the image of the scene 200 to identify one or more faces 201, 202; the modification of the image 12 of the scene 200 to produce the modified scene image 22, 32, and the causing display of the modified scene image 22, 32 can occur automatically, that is without any confirmatory or other user input from a user of the apparatus 10. In other examples, the processing of the image of the scene 200 to identify one or more faces 201, 202; the modification of the image 12 of the scene 200 to produce the modified scene image 22, 32, and/or the causing display of the modified scene image 22, 32 can occur semi-automatically, that is, in response to a confirmatory or other user input from a user of the apparatus 10.

In the examples illustrated, the modified scene image 22, 32, includes, at least partially, at least one face 201 from the image 12 of the scene 200 captured by the camera 40

In the modified scene image 22, the at least one face 201 can be displayed with the original image 12 with the at least one face 202 excluded, or the at least one face 201 can be cropped and displayed without the remainder of the original image 12. In the modified scene image 32, the at least one face 201 can be cropped and displayed without the remainder of the original image 12.
Therefore, in some examples, the modified scene image 22, 32 comprises a cropped image portion 221 that corresponds to the portion of the image 12 comprising the face 201 only, that has been cropped from the image 12.

In some examples, the modified scene image 22, 32, includes multiple faces from the image 12 of the scene 200 captured by the camera 40.

In some examples, the modified scene image 22, 32 comprises a compilation of cropped face portions. Each cropped face portion corresponds to a distinct portion of the image 12 comprising one of the multiple faces only, that has been cropped from the image 12.

In the examples illustrated, the modified scene image 22, 32, excludes, at least partially, at least one face 202 from the image 12 of the scene 200 captured by the camera 40

The term "excludes" as applied to the exclusion of a face 202 or portion of a face from the image 12 of the scene 200 captured by the camera 40 means that visual information from the scene 200 captured as image 12 by the camera 40 is removed, for example, to prevent visual recognition of the face from the modified scene image 22, 32.

Examples of modification include but are not limited to:
converting an image of a face to a translucent wireframe outline;
replacement of the face;
blurring of the face;
applying an obfuscation kernel to the face that combines multiple pixels into a single pixel;
excluding portions of the face corresponding to principal components of the face.

The exclusion of a face from the modified scene image 22, 32 provides privacy control in respect of persons captured in the image 12 of the scene 200.

The display of the modified scene image 22, 32 can occur during a pre-capture preview stage before storage of the said image of the scene 200 captured by the camera 40. Thus 'capturing' comprises the time when a user is previewing a scene 200 before actually taking and saving a modified scene image 22.

The modified scene 200 is updated in real time. Changes in the scene 200 are immediately captured in the image 12 of the scene and included, if appropriate, in the modified scene image 22.

The displayed modified scene image 22, 32 is updated in real time. Changes in the scene 200 and the image 12 of the scene 200 can be immediately included in the displayed modified scene image 22, 32.

In at least some examples, the modified scene image 22, 32 output at the display 20, 30 comprises only a face or faces 201, 202 that are permitted to be included in the scene 200 captured by the camera 40 and excludes a face or faces 201, 202 that are not permitted to be included in the scene 200 captured by the camera 40. In the modified scene image 22, the face or faces 201 that are permitted to be included in the scene 200 can be displayed with the original image 12 with faces 202 that are not permitted to be included in the scene 200 excluded. Alternatively, in the modified scene image 22, the face or faces 201 that are permitted to be included in the scene 200 can be cropped and displayed without what remains of the original image 12 after cropping. In the modified scene image 32, the face or faces 201 that are permitted to be included in the scene 200 can be cropped and displayed without what remains of the original image 12 after cropping.

The permission for a face to be included in a recorded scene image, the modified scene image 22, 32, can be obtained directly from the 'owner' of the face by wireless communication with a remote device 400 (illustrated in FIG 10, for example) associated with the owner of the face, alternatively the permission for a face to be included in a recorded scene image, the modified scene image 22, 32, can be obtained indirectly from the 'owner' of the face by communication with a remote server that provides a permission service on behalf of the owner of the face. The permission can, for example, be obtained via privacy settings associated with the face.

The permission for a face to be included in a recorded scene image, the modified scene image 22, 32, can be obtained from a user of the apparatus 10. For example, the user can select a face displayed on the viewfinder display 20 to allow (or disallow) inclusion of the face in the modified scene image 22, 32. A photographer using the apparatus 10 can give an indication that a person is not to be included in a photo by touching on the person's image on the viewfinder display 20. Other user input mechanisms can be used for allowing (or disallowing) the inclusion of a face. For example, audio cues can be provided verbally by the user of the apparatus 10 to select a face and control permission, or a gesture can be performed by the user of the apparatus 10 to select a face and control permission.

The permission for a face to be included in a recorded scene image, the modified scene image 22, 32, can be obtained from an owner of a face by the owner giving verbal instructions to the photographer using the apparatus 10, or by providing audio cues to control photographer permission or by using a gesture to control permission.

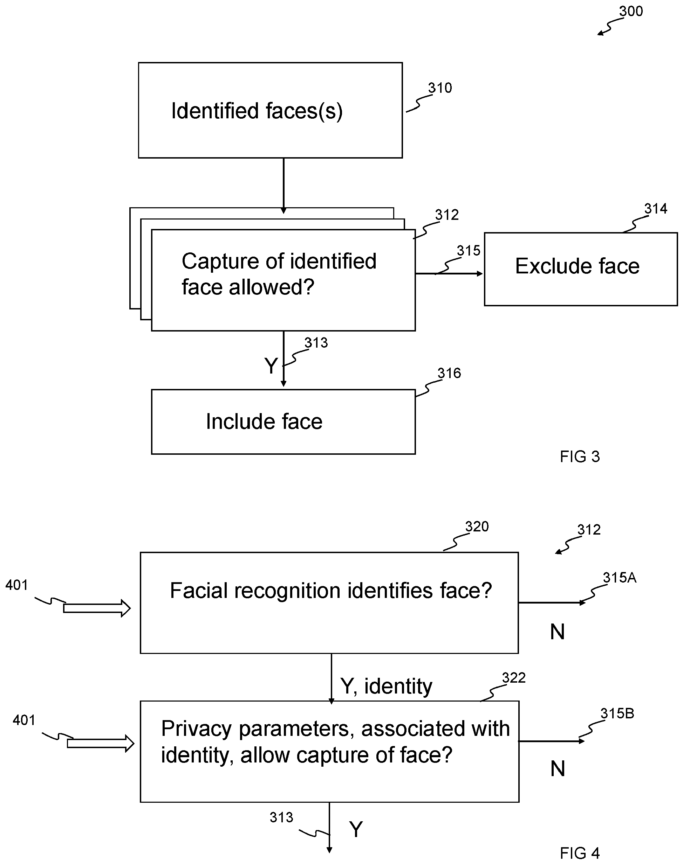

FIG 3 illustrates an example of a method 300 for controlling processing of the image 12 of the scene 200 captured by the camera 40.

At block 310, the method 300 comprises processing the image of the scene 200 captured by the camera 40 to identify one or more objects at least partially included within the image 12 of the scene 200 captured by the camera 40 as one or more faces 201, 202 at least partially included within the image 12 of the scene 200 captured by the camera 40.

The image of the scene 200 captured by the camera 40 can be processed to identify one or more objects at least partially included within the image 12 of the scene 200 captured by the camera 40 as one or more faces 201, 202 using known computer vision algorithms. For example, objects can be detected using edge detection and movement of image features. An object can be discriminated as a face using principal component analysis for example.

At block 312, the method 300 comprises determining whether or not a face 201, 202 included in the scene 200 is permitted 313 to be included in the scene 200 captured by the camera 40 or is not permitted 315 to be included in the scene 200. The determination can be performed for each face 201, 202 included in the image 12 of the scene 200.

Next at blocks 314, 316 the method 300 comprises creating the modified scene image 22, 32.

If the face is permitted 313 to be included in the scene 200 captured by the camera 40, the modified scene image 22, 32 is configured, at block 316, to include the permitted face.

If the face is not permitted 315 to be included in the scene 200 captured by the camera 40, the modified scene image 22, 32 is configured to exclude, at block 314, the non-permitted face from the image 12 of the scene 200.

Referring back to FIG 2B, in this example, the face 201 is permitted to be included in the scene 200 and is included in the displayed modified scene image 22 whereas the face 202 is not permitted to be included in the scene 200 and is excluded from the modified scene image 22.

Referring back to FIG 2C, in this example, the face 201 is permitted to be included in the scene 200 and is included in the displayed modified scene image 32 whereas the face 202 is not permitted to be included in the scene 200 and is excluded from the modified scene image 32.

FIG 4 illustrates an example of block 312, in more detail. The block 312 comprises subblocks 320, 322.

The method associated with block 312 comprises determining whether or not a face 201, 202 included in the scene 200 is permitted 313 to be included in the scene 200 captured by the camera 40 or is not recognized 315A or not permitted 315B to be included in the scene 200

At sub-block 320, the method comprises performing facial recognition (face recognition) on the faces 201, 202 at least partially included within the image 12 of the scene 200 captured by the camera 40. Face recognition associates an identity with a recognized face.

If the face is not recognized 315A, the face is excluded from the modified scene image 22, 32.

If a face is recognized, then the method moves to sub-block 322.

At sub-block 322, the method comprises determining whether privacy settings associated with the identity of the recognized face determined at sub-block 320, permit inclusion of the recognized face within a modified scene image 22, 32. A face within the scene 200 captured by the camera 40 is retained within the modified scene image 22, 32 if the privacy settings associated with that face allow the face to be permitted 313.

If the privacy settings associated with that face do not allow the face to be retained 315B, the recognized face within the scene 200 captured by the camera 40 is excluded from the modified scene image 22, 32.

Thus, modification of the image 12 of the scene 200 captured by the camera 40 to produce the modified scene image 22, 32, modifies the image 12 of the scene 200 captured by the camera 40 in dependence on privacy settings for the identity associated with a recognized face in the image 12 of the scene 200 captured by the camera 40. If the privacy settings do not permit inclusion of the face, the face is excluded from the modified scene image 22, 32.

In some examples, faces 201, 202 are labelled for inclusion or exclusion within the modified scene image 22, 32 in dependence on at least the face recognition in accordance with FIG 4. The faces 201, 202 labelled for inclusion are included in the modified scene image 22, 32 and the faces 201, 202 labelled for exclusion are excluded from the modified scene image 22, 32.

The method at block 312 can label 313 a face for inclusion if the face is a recognized face and the identity associated with the recognized face is associated with permissive privacy settings, label 315B a face for exclusion if the face is a recognized face and the identity associated with the recognized face is not associated with permissive privacy settings, and label 315A a face for exclusion if the face is not a recognized face. A face is thus excluded (by default) unless permissive privacy settings can be associated with the face.

In other examples, a face can be included (by default) unless non-permissive privacy settings can be associated with the face.

The method receives parameters 401 (see FIG 9A) for performing face recognition at sub-block 320. The parameters 401 enable recognition of a face at least partially included within the image 12 of the scene 200 and associate the recognized face with an identity. In some examples, the parameters 401 that enable the recognition of a face and the association of the recognized face with an identity are received via wireless communication from a remote device 400 associated with the identity.

The method receives parameters 401 (see FIG 9A) comprising privacy settings at sub-block 322. The parameters 401 associate an identity with privacy settings. In some examples, the parameters 401 that enable the association of privacy settings with a recognized face via the identity are received via wireless communication from a remote device associated with the identity.

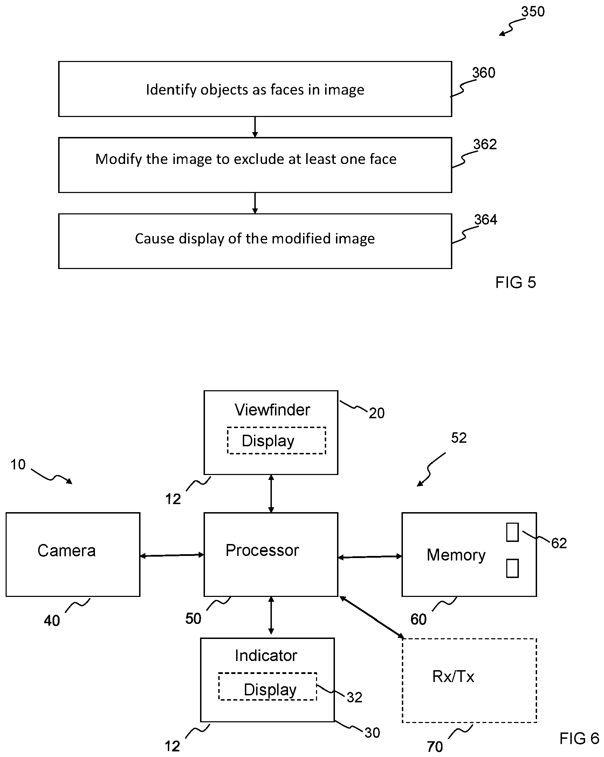

FIG 5 illustrates an example of a method 350 that can be performed at the apparatus 10.

The apparatus 10 comprises a camera 40 for capturing an image 12 of a scene 200, the location of the scene 200 relative to the apparatus 10 defining a first direction D1.

The method 350 comprises, at block 360, processing the image 12 of the scene 200 captured by the camera 40 to identify one or more objects at least partially included within the image of the scene 200 captured by the camera 40 as one or more faces 201, 202 at least partially included within the image 12 of the scene 200 captured by the camera 40.

The method 350 comprises, at block 362, modifying the image 12 of the scene 200 captured by the camera 40 to produce a modified scene image 22, 32, that excludes, at least partially, at least one face from the image 12 of the scene 200 captured by the camera 40.

The method 350 comprises, at block 364, causing display of the modified scene image 22, 32.

FIG 6 illustrates an example of the apparatus 10 as previously described.

The apparatus 10 comprises a camera 40, at least one processor 50, and at least one memory 60. The apparatus 10 can be any suitable apparatus it can be a mobile apparatus, a hand-held apparatus, a camera phone, a portable camera etc.

The camera 40 is configured to capture an image of a scene 200. The location of the scene 200 relative to the apparatus 10 defines a first direction D1. The camera 40 can capture a still image and/or video.

The at least one memory 60 includes computer program code 62.

The at least one memory 60 and the computer program code 62 are configured to, with the at least one processor 50, cause the apparatus 10 at least to perform:
processing the image 12 of the scene 200 captured by the camera 40 to identify one or more objects at least partially included within the image 12 of the scene 200 captured by the camera 40 as one or more faces 201, 202 at least partially included within the image 12 of the scene 200 captured by the camera 40;
modifying the image 12 of the scene 200 captured by the camera 40 to produce a modified scene image 22, 32, that excludes, at least partially, at least one face from the image 12 of the scene 200 captured by the camera 40; and
causing display of the modified scene image 22, 32

The apparatus 10 optionally comprises a viewfinder that comprises a viewfinder display 20. The apparatus 10 optionally comprises an indicator display 30. The apparatus 10 optionally comprises a wireless transceiver 70. Any one or more of the viewfinder display 20, the indicator display 30 and the wireless transceiver 70 can be used to cause display of a modified scene image 22, 32.

As previously illustrated in FIG 2B, the viewfinder display 20 can be used for displaying the modified scene image 22 for user-selective storage by the camera 40. The viewfinder display 20 can provide a preview before user-input that 'takes' the picture and stores the modified scene image in the memory 60.

The indicator display 30 and the wireless transceiver 70 can be used to cause display of the modified scene image 32 to at least one person in the first direction D1. The person or persons to whom the modified scene image 32 is displayed can, for example, be within a field of view of the camera 40. An indicator display 30 can be a part of the apparatus 10 (see FIG 2C) or a part of a remote device or devices 400 (see FIG 10).

In some but not necessarily all examples, the indicator display 30 is a part of the apparatus 10. The indicator display 30 can, for example, be oriented or orientable in the first direction D1. Display of a modified scene image 32 to at least one person in the first direction D1 is achieved by displaying the modified scene image 32 on the indicator display 30. In some examples the indicator display 30 is tiltable and is oriented by tilting or rotating the indicator display 30 relative to the apparatus 10. In some examples the apparatus 10 is a foldable apparatus and the indicator display 30 is oriented by folding the apparatus 10. In some examples, a single display is folded to provide the indicator display 30 and the viewfinder display 20 simultaneously. In other examples, the viewfinder display 20 and the indicator display 30 are distinct and separate.

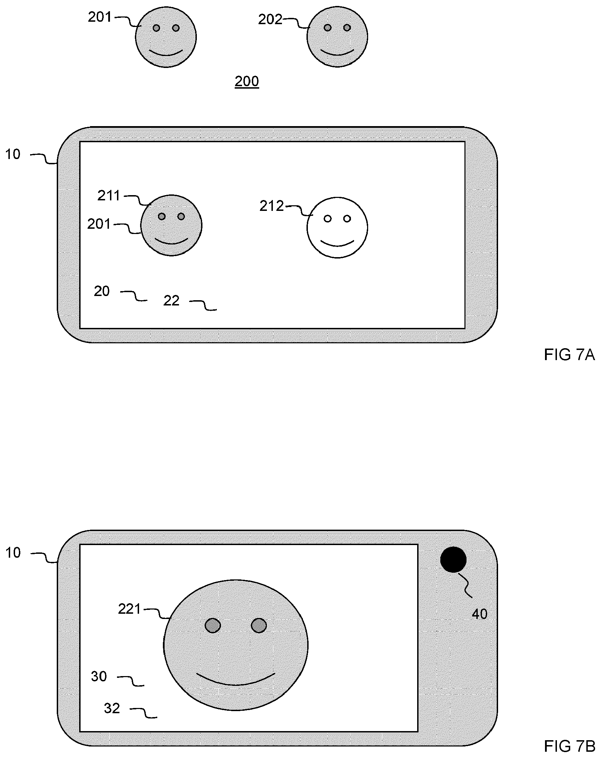

FIG 7A illustrates the scene 200 captured by a camera 40 at a camera sensor. The scene 200 includes faces 201, 202. A modified scene image 22 is displayed at a viewfinder display 20 of the apparatus 10. The modified scene image 22 includes the image of the scene 200 including the face 201 as image portion 211 but excluding the face 202 and instead having replacement image portion 212.

In this example, the output at the viewfinder display 20 comprises only a face or only cropped faces 201, 202 that are within the scene 200 captured by the camera 40 and are permitted to be included in a captured image.

In other examples, the output at the viewfinder display 20 can be controlled to comprise only a cropped face or cropped faces 201, 202. The cropped face or cropped faces 201, 202 can have relative sizes that correspond to relative sizes of the faces 201, 202 within the image captured by the camera 40. The output at the viewfinder display 20 can, for example, comprise only a cropped face or cropped faces 201, 202 that have relative positions that correspond to relative positions of the faces 201, 202 within the image captured by the camera 40.

FIG 7B illustrates the modified scene image 32 that is displayed at an indicator display 30 of the apparatus 10 towards the scene 200. The modified scene image 32 includes the face 201, cropped from the image of the scene 200, as image portion 221 but excludes the face 202.

In this example, the output at the indicator display 30 comprises only a cropped face or only cropped faces 201, 202 that are within the scene 200 captured by the camera 40 and are permitted to be included in a captured image, the rest of the image of the scene having been excluded.

The output at the indicator display 30 comprises only a cropped face or cropped faces 201, 202 that have relative sizes that correspond to relative sizes of the faces 201, 202 within the image captured by the camera 40.

The output at the indicator display 30 comprises only a cropped face or cropped faces 201, 202 that have relative positions that correspond to relative positions of the faces 201, 202 within the image captured by the camera 40.

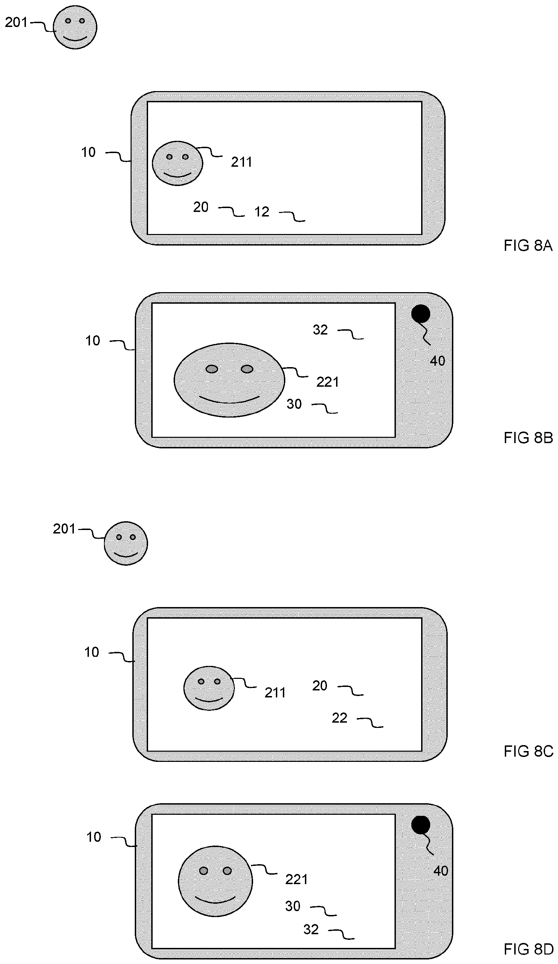

FIG 8A illustrates a scene 200 at a first time captured by a camera 40 at a camera sensor. The scene 200 includes face 201. An image 12 of the scene 200 is displayed at a viewfinder display 20 of the apparatus 10. The image 12 of the scene 200 includes a slightly distorted image portion 211 of the face 201. The distortion in this example arises because the lens used to image the scene 200 has high power and the face 201 is located towards an edge of the lens.

FIG 8B illustrates the modified scene image 32 that is displayed at an indicator display 30 of the apparatus 10 towards the scene 200. The modified scene image 32 includes the face 201, cropped from the image of the scene 200, as image portion 221.

In this example, the output at the indicator display 30 comprises only a cropped face or only cropped faces 201, 202 that are within the scene 200 captured by the camera 40 and are permitted to be included in a captured image, the rest of the image of the scene having been excluded.

The output at the indicator display 30 comprises only a cropped image portion 221 of the face 201 that has a relative distortion that is increased compared to distortion of the face 201 within the image 12 captured by the camera 40.

FIG 8C illustrates the scene 200 of FIG 8A at a second time after the first time, captured by a camera 40 at a camera sensor. The scene 200 includes the face 201, which has moved. A image 12 of the scene 200 is displayed at a viewfinder display 20 of the apparatus 10. The image 12 includes a less distorted image portion 211 of the face 201. The distortion in this example is less because the face 201 has moved further away from the edge of the lens.

FIG 8D illustrates the modified scene image 32 that is displayed at an exterior display 30 of the apparatus 10 towards the scene 200. The modified scene image 32 includes the face 201, cropped from the image of the scene 200, as image portion 221. In this example, the output at the indicator display 30 comprises only a cropped face or only cropped faces 201, 202 that are within the scene 200 captured by the camera 40 and that are permitted to be included in a captured image, the rest of the image of the scene 200 having been excluded. The output at the indicator display 30 comprises only a cropped image portion 221 of the face 201 that has
no relative distortion compared to the face 201 within the image 12 captured by the camera 40.

FIG 9A illustrates that parameters 401 can be received from remote devices 400 associated with different faces 201, 202, 203. For example, each person with a face 201, 202, 203 can be in possession of a personal remote device 400. The parameters can be communicated wirelessly using, for example, a wireless transceiver at the remote device 400 and a wireless transceiver 70 at the apparatus 10. In some examples, the wireless transceivers are radio transceivers.

The parameters 401 associated with a particular face 201, 202, 203 can be used to enable facial recognition of that face and the association of the recognized face with an identity. The apparatus 10 is thus configured to communicate with at least one remote device 400 separate from the apparatus 10 to obtain parameters 401 for performing face recognition on the image 12 of the scene 200 to recognize a face 201, 202, 203 at least partially included within the image 12 of the scene 200 and associate an identity with the recognized face.

The parameters 401 associated with a particular remote device 400 can be used to provide privacy settings for the user of that remote device 400. The apparatus 10 is therefore configured to communicate with at least one remote device 400 separate from the apparatus 10 to obtain privacy settings associated with an identity.

FIGs 9B and 9C illustrate examples in which the indicator display 30 that displays the modified scene image 32 to at least one person in the first direction D1 is part of a remote device 400. The apparatus 10 causes display of a modified scene image 32 to at least one person in the first direction D1 by sending the modified scene image 32 to the remote device 400 for display on the indicator display 30 of the remote device 400.

In FIG 9B, the communication message 410 comprising the modified scene image 32 is broadcast or multicast to the remote devices 400 for display on their indicator displays 30. It is a public or shared communication.

In FIG 9C, the communication message 410 comprising the modified scene image 32 is addressed individually to each remote device 400 for display on its indicator display 30. It is a private communication. In this example a different, personalized, modified scene image 32 can be sent to each remote device 400. For example, a modified scene image 32 can be sent to a remote device only if the face associated with the remote device 400 is included in the modified scene image 32. Additionally, or alternatively, a modified scene image 32 sent to a remote device can be adapted to include only the face associated with that remote device 400.

Thus, the apparatus 10 is configured to generate one or more communication message 410 addressed in dependence upon the identity of one or more faces 201, 202 within the image 12 of the scene 200 captured by the camera 40. The communication message 410 confirm inclusion and/or confirm exclusion within the image 12 of the scene 200 captured by the camera 40. The confirmation is via display at the remote device 400 of the modified scene image 32.

FIGs 9A, 9B and 9C illustrate a system 500 comprising the apparatus 10 and at least one remote device 400 separate from the apparatus 10. The at least one remote device 400 comprises a remote indicator display 30 (see FIG 10). The apparatus 10 causes display of the modified scene image 32 to at least one person in the first direction D1 by causing display of the modified scene image 32 on the remote indicator display 30.

FIG 10 illustrates an example of a remote device 400 that has an indicator display 30. The apparatus 10 causes the modified scene image 32 to be displayed at an remote indicator display 30 of the remote devices 400, separate from the apparatus 10. The modified scene image 32 as previously described can include a face 201 as an image portion 221 but also exclude a face 202.

In some examples, the remote device 400 is a handheld device. In other examples, the remote device is a wearable device 402 for example a watch or band.

In some examples, the modified scene image 22 is the same as the modified scene image 32. In other examples, the modified scene image 22 is not the same as the modified scene image 32.

In some examples, both the modified scene image 22 and the modified scene image 32 have faces excluded compared to the image 12 of the scene 200, for example based on permissions. However, in some examples, the modified scene image 22 otherwise represents the image 12 of the scene 200 whereas the modified scene image 32 represents only faces included within the modified scene image 22.

In some examples, the same modified scene image 32 is displayed at the indicator display 30 of each remote device 400. This may be the same as the modified scene image 22 displayed in the viewfinder display 20 or may be different as explained above.

In some examples, a different modified scene image 32 is displayed at the indicator display 30 of each remote device 400. The modified scene image 32 displayed at a particular remote device 400 can, for example, only include a face associated with that remote device 400.

In the previously described examples, the apparatus 10 is configured to control privacy by excluding (e.g., by not including or by removing) a person from a photograph and is configured to provide an indication to a person who is being captured during capture time that he is actually not included in the photo even though the photographer shoots towards him.

The apparatus 10 enables an indication to persons who are being captured about if and how they are captured.

For example, faces of persons who are captured in the image 12 and who have allowed themselves to be included in the photo and/or whom the photographer has allowed to be in the photo are displayed via a modified scene image 22, 32. The faces are cropped in the modified scene image 32. The faces can be cropped in the modified scene image 22 or alternatively displayed in the original image 12 of the scene modified to remove one or more faces.

The modified scene image 22, 32 can comprise a single cropped face or optionally, a compilation of multiple cropped faces. For example, the modified scene image 22, 32 can be a processed and computer-generated compilation of the detected faces in the image 12 that are to be included in the image of the scene 200 so that persons are able to see the relevant information from far away.

In the example of FIG 7A, 7B, the person having face 202 has not given permission to be included in the photo, thus a semi-transparent wireframe depiction (image portion 212) of his face is shown in the modified scene image 22 to the photographer using the apparatus 10 via the viewfinder display 20. This indicates that the face 202 will be removed automatically from the captured content at storage. Alternatively, the photographer using the apparatus 10 can control permissions and disallow a person such as a person with the face 202 from being included into the photo.

On the indicator display 30, a modified scene image 32 includes a visual representation (image portion 221) of the face 201 of a person because the person has given permission for inclusion in the photo and/or the photographer (user of the apparatus 10) has allowed that person to be included. The person who has face 201 is thus able to see that he/she is included in the photo. This provides valuable information to that person such as movement is not required to get into the image

For example, in the case when the person who wishes to be photographed is towards the side of the apparatus 10, they are given reassurance that they are included in the photograph because the modified scene image 32 including their face is displayed via the indicator display 30. The indicator display 30 is not just showing an image 12 of what is being captured but a processed and computer-generated compilation of the detected faces in the image 12, as the displayed modified scene image 32, so that persons are able to see the included faces in the modified scene image 32 from far away.

Correspondingly, no image is shown of the face 202 since there is no permission for inclusion and the face 202 is therefore excluded. Therefore, the person having the face 202 is able to see, from the modified scene image 32 displayed on the indicator display 30, that he/she is not included in the photo even though the camera 40 of apparatus 10 is pointing towards him/her. Thus, he/she is reassured that he/she not granting permission has been taken into account properly. In the case when the photographer using the apparatus 10 has disallowed the person having face 202 from being in the photo, the person having face 202 gets a visual indication, from the modified scene image 32 displayed on the indicator display 30, that he/she is not desired in the photo (and should move away) because the modified scene image 32 does not include his/her face 202.

FIG 8A, 8B, 8C, 8D illustrate how the apparatus 10 controls indication to a person whether he/she is captured in a photo with proper dimensions or whether the lens of the camera makes some undesirable distortions to his/her dimensions, such as makes his/her face wider which is typical with super wide-angle lenses.

For example, the face will be wider at the sides of the image because of distortions caused by a wide-angle lens, or the face will be partially shown if the user is not fully visible in the content. In FIG 8B, because the person with face 201 is located near the side of the field of view of the camera's wide-angle lens, his face on the viewfinder display 20 and on the indicator display 30 appears wide.

In the modified scene image 32, displayed in the indicator display 30, the distortion has been exaggerated a bit to make the distortion easier to perceive by the person having face 201 at a distance. A cropped image portion 221 of the face 201 has a relative distortion that is increased compared to distortion of the face 201 within the image 12 captured by the camera 40- the face 202 cropped from the image 12 is made even wider than in reality. Therefore, the person having face 201 gets valuable information that he may want to move towards the center of the image to have his face captured at more realistic proportions. As the person having face 201 moves towards the center of the captured photograph (illustrated in FIGs 8C & 8D), the change in the captured face is indicated to him in real time by modifying in real time the modified scene image 32 displayed on the indicator display 30. In this case the person having the face 201 has moved towards the center and the displayed modified scene image 32 includes a normally wide face.

In the preceding examples, the description and drawings have referred to or referenced whole faces. It should be appreciated that the examples described are also appropriate when only part of a face is included in the image 12 captured by the camera. In this example, the cropped face included in the modified scene image 22, 32 will be a crop of that part of the face included in the image 12. This provides information to the photographer using the apparatus 10 via the viewfinder display 20 and to persons in the scene 200 whether or not a particular face is fully included within the image 12 of the scene 200 and the modified scene image 22, 32. A person in the scene 200 is given a visible indication that if he/she wants to be included in the image he/she needs to move or if he/she does not want to be included in the image he needs to move.

The above-described approaches have several benefits:
- persons in a scene 200 see that they are not included in the photo if they have disallowed that (or the photographer has indicated them to be removed from the photo)
- persons in a scene 200 see if they are visible in the photo when they want to be there
- persons in a scene 200 see if they are fully visible in the photo even if they are on the sides, indicating whether there is a need to push themselves to get into the photo.
- persons in a scene 200 see how their face is included in the photo: for example, if they are on the sides and captured by the edge of a wide-angle lens, the face shown on the back display is shown wider indicating the visual distortion. If the user wishes to keep his facial proportions unaltered, he knows to move towards the center of the capture area.

Fig 6 illustrates an example of a controller 52. Implementation of a controller 52 may be as controller circuitry. The controller 52 may be implemented in hardware alone, have certain aspects in software including firmware alone or can be a combination of hardware and software (including firmware).

As illustrated in Fig 6 the controller 52 may be implemented using instructions that enable hardware functionality, for example, by using executable instructions of a computer program 62 in a general-purpose or special-purpose processor 50 that may be stored on a computer readable storage medium (disk, memory etc.) to be executed by such a processor 50.

The processor 50 is configured to read from and write to the memory 60. The processor 50 may also comprise an output interface via which data and/or commands are output by the processor 50 and an input interface via which data and/or commands are input to the processor 50.

The memory 60 stores a computer program 62 comprising computer program instructions (computer program code) that controls the operation of the apparatus 10 when loaded into the processor 50. The computer program instructions, of the computer program 62, provide the logic and routines that enables the apparatus to perform the methods illustrated in Figs 3 to 5. The processor 50 by reading the memory 60 is able to load and execute the computer program 62.

The apparatus 10 therefore comprises:
a camera 40 for capturing an image of a scene, the location of the scene relative to the apparatus 10 defining a first direction;
at least one processor 50; and
at least one memory 60 including computer program code 62
the at least one memory 60 and the computer program code 62 configured to, with the at least one processor 50, cause the apparatus 10 at least to perform:
   processing the image of the scene captured by the camera 40 to identify one or more objects at least partially included within the image of the scene captured by the camera 40 as one or more faces at least partially included within the image of the scene captured by the camera 40;
   modifying the image of the scene captured by the camera 40 to produce a modified scene image, that excludes, at least partially, at least one face from the image of the scene captured by the camera 40; and
   causing display of the modified scene image.

As illustrated in Fig 11, the computer program 62 may arrive at the apparatus 10 via any suitable delivery mechanism 64. The delivery mechanism 64 may be, for example, a machine-readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 62. The delivery mechanism may be a signal configured to reliably transfer the computer program 62. The apparatus 10 may propagate or transmit the computer program 62 as a computer data signal.

The computer program can be run by an apparatus 10 comprising a camera 40 for capturing an image of a scene 200, the location of the scene 200 relative to the apparatus 10 defining a first direction D1.

The enables at the apparatus 10 at least the following functions. The computer program 62 comprises computer program instructions for causing the apparatus 10 to perform at least the following functions or for performing at least the following functions:
processing the image 12 of the scene 200 captured by the camera 40 to identify one or more objects at least partially included within the image 12 of the scene 200 captured by the camera 40 as one or more faces 201, 202 at least partially included within the image 12 of the scene 200 captured by the camera 40;
modifying the image 12 of the scene 200 captured by the camera 40 to produce a modified scene image 22, 32, that excludes, at least partially, at least one face from the image 12 of the scene 200 captured by the camera 40; and
causing display of the modified scene image 22, 32

The computer program 62 when run by an apparatus comprising a camera for capturing an image of a scene, the location of the scene relative to the apparatus defining a first direction, enables at the apparatus:
means for processing the image 12 of the scene 200 captured by the camera 40 to identify one or more objects at least partially included within the image 12 of the scene 200 captured by the camera 40 as one or more faces 201, 202 at least partially included within the image 12 of the scene 200 captured by the camera 40;
means for modifying the image 12 of the scene 200 captured by the camera 40 to produce a modified scene image 22, 32, that excludes, at least partially, at least one face from the image 12 of the scene 200 captured by the camera 40; and
means for causing display of the modified scene image 22, 32

The computer program instructions may be comprised in a computer program, a non-transitory computer readable medium, a computer program product, a machine-readable medium. In some but not necessarily all examples, the computer program instructions may be distributed over more than one computer program.

Although the memory 60 is illustrated as a single component/circuitry it may be implemented as one or more separate components/circuitry some or all of which may be integrated/removable and/or may provide permanent/semi-permanent/ dynamic/cached storage.

Although the processor 50 is illustrated as a single component/circuitry it may be implemented as one or more separate components/circuitry some or all of which may be integrated/removable. The processor 50 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software may not be present when it is not needed for operation.
This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the Figs 3 to 5 may represent steps in a method and/or sections of code in the computer program 62. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

The recording of data may comprise only temporary recording (capture), or it may comprise permanent recording (storage) or it may comprise both temporary recording and permanent recording. Temporary recording implies the recording of data temporarily. This may, for example, occur during sensing or image capture or image preview, occur at a dynamic memory, occur at a buffer such as a circular buffer, a register, a cache or similar. Permanent recording implies that the data is in the form of an addressable data structure that is retrievable from an addressable memory space and can therefore be stored and retrieved until deleted or over-written, although long-term storage may or may not occur. The use of the term 'capture' in relation to an image relates to temporary recording of the data of the image. The use of the term 'store' or 'storage' in relation to an image relates to permanent recording of the data of the image.

The systems, apparatus, methods and computer programs may use machine learning which can include statistical learning. Machine learning is a field of computer science that gives computers the ability to learn without being explicitly programmed. The computer learns from experience E with respect to some class of tasks T and performance measure P if its performance at tasks in T, as measured by P, improves with experience E. The computer can often learn from prior training data to make predictions on future data. Machine learning includes wholly or partially supervised learning and wholly or partially unsupervised learning. It may enable discrete outputs (for example classification, clustering) and continuous outputs (for example regression). Machine learning may for example be implemented using different approaches such as cost function minimization, artificial neural networks, support vector machines and Bayesian networks for example. Cost function minimization may, for example, be used in linear and polynomial regression and K-means clustering. Artificial neural networks, for example with one or more hidden layers, model complex relationship between input vectors and output vectors. Support vector machines may be used for supervised learning. A Bayesian network is a directed acyclic graph that represents the conditional independence of a number of random variables. Machine learning can be used for object and face identification and for face recognition. Machine learning can be used to learn privacy settings and/or permissions from previous examples.

The algorithms hereinbefore described may be applied to achieve technical effects such as security functions. The inclusion of a face within a stored image can be controlled (e.g. prevented) using examples described. The control can be effected via security control parameters 401 such as face recognition parameters and/or privacy settings.

As used here 'module' refers to a unit or apparatus that excludes certain parts/components that would be added by an end manufacturer or a user. The controller 52 can be a module.

The above-described examples find application as enabling components of:
automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising:
a camera for capturing an image of a scene, the location of the scene relative to the apparatus defining a first direction;
means for processing the image of the scene captured by the camera to identify one or more objects at least partially included within the image of the scene captured by the camera as one or more faces at least partially included within the image of the scene captured by the camera;
means for modifying the image of the scene captured by the camera to produce a modified scene image, that excludes, at least partially, at least one face from the image of the scene captured by the camera; and
means for causing display of the modified scene image.

2. An apparatus as claimed in claim 1, configured to communicate with at least one remote device separate from the apparatus to obtain parameters for performing face recognition on the image of the scene to recognize a face at least partially included within the image of the scene and associate an identity with the recognized face.

3. An apparatus as claimed in claim 1 or 2, comprising means for performing face recognition on the one or more faces at least partially included within the image of the scene captured by the camera, wherein face recognition associates an identity with a recognized face; and
means for labelling the one or more faces for inclusion or exclusion in dependence on at least the face recognition; wherein
the means for modifying the image of the scene captured by the camera to produce the modified scene image is configured to include faces labelled for inclusion, if any, in the modified scene image and to exclude faces labelled for exclusion, if any, from the modified scene image.

4. An apparatus as claimed in claim 3, wherein the means for labelling the faces is configured to:
label a face for inclusion if the face is a recognized face and the identity associated with the recognized face is associated with permissive privacy settings,
label a face for exclusion if the face is a recognized face and the identity associated with the recognized face is not associated with permissive privacy settings, and
label a face for exclusion if the face is not a recognized face.

5. An apparatus as claimed in any preceding claim, comprising means for performing face recognition on the one or more objects identified as faces, wherein face recognition associates an identity with a recognized face at least partially included within the image of the scene
wherein the means for modifying the image of the scene captured by the camera is configured to produce the modified scene image in dependence on privacy settings for the identity associated with a recognized face,
wherein a face within the scene captured by the camera is retained within the modified scene image if the privacy settings associated with that face allow the face to be retained and otherwise the face within the scene captured by the camera is excluded.

6. An apparatus as claimed in claim 4 or 5, configured to communicate with at least one remote device separate from the apparatus to obtain privacy settings associated with an identity.

7. An apparatus as claimed in any preceding claim, wherein the means for causing display of the modified scene image is configured to cause output on at least one display of at least one face that is within the scene captured by the camera or of a compilation of faces that are within the scene captured by the camera.

8. An apparatus as claimed in claim 7, wherein the output at the display comprises a cropped face or cropped faces that are within the scene captured by the camera.

9. An apparatus as claimed in any of claims 7 to 8, wherein the output at the display comprises only a cropped face or cropped faces that have relative sizes that correspond to relative sizes of the one or more faces within the image captured by the camera or have relative positions that correspond to relative positions of the one or more faces within the image captured by the camera or have relative distortions that increase relative distortion of the one or more faces within the image captured by the camera.

10. An apparatus as claimed in any preceding claim, wherein the means for causing display of the modified scene, is configured to cause the display of the modified scene during a pre-capture preview stage before storage of the said image of the scene captured by the camera.

11. An apparatus as claimed in any preceding claim comprising viewfinder means for displaying the modified scene image for user-selective storage by the apparatus.

12. An apparatus as claimed in any preceding claim comprising means for causing display of the modified scene image to at least one person in the first direction.

13. An apparatus as claimed in claim 12, comprising a display oriented or orientable in the first direction, wherein the means for causing display of the modified scene image to at least one person in the first direction is configured to cause display of the modified scene image on the display.

14. A system comprising the apparatus as claimed in any preceding claim when dependent on claim 2 and at least one remote device separate from the apparatus, wherein the separate at least one remote device comprises a remote display and wherein the means for causing display of the modified scene image to at least one person in the first direction is configured to cause display of the modified scene image on the remote display.

15. A computer program that when run by an apparatus comprising a camera for capturing an image of a scene, the location of the scene relative to the apparatus defining a first direction, performs:
processing the image of the scene captured by the camera to identify one or more objects at least partially included within the image of the scene captured by the camera as one or more faces at least partially included within the image of the scene captured by the camera;
modifying the image of the scene captured by the camera to produce a modified scene image, that excludes, at least partially, at least one face from the image of the scene captured by the camera; and
causing display of the modified scene image
